# FASCICULE DE BREVET EUROPEEN

(11) **EP 0 442 833 B1**
(45) Date de publication et mention de la délivrance du brevet: **13.10.1993**
(21) Numéro de dépôt: 91440009.8
(22) Date de dépôt: 11.02.1991
(51) Int. Cl.: A01B 73/06, A01D 78/10

(54) **Machine de fenaison avec dispositif de protection perfectionné**
Heuwerbungsmaschine mit verbesserter Schutzvorrichtung
Haymaking machine with an improved safety device

(30) Priorité: 13.02.1990 FR 9001861
(43) Date de publication de la demande: 21.08.1991
(73) Titulaire: KUHN S.A., F-67700 Saverne (FR)
(72) Inventeur: Aron, Jérôme, F-67330 Dossenheim sur Zinsel (FR)
(74) Mandataire: Andres, Jean-Claude

(56) Documents cités:
- DE-U- 8 812 616
- FR-A- 2 063 497

## Description

La présente invention se rapporte à une machine de fenaison comportant un châssis portant au moins un rotor qui est équipé de bras porte-outils transposables dans une position de travail et une position de transport, ledit rotor étant entouré par un dispositif de protection réalisé en plusieurs parties ajustables dans au moins deux positions dont l'une correspond à la position de travail et l'autre à la position de transport.

Sur une machine avec un rotor d'andainage, connue dans le brevet FR - 2 063 497, le dispositif de protection est réalisé en deux parties courbes qui sont articulées sur un support fixe solidaire de la machine. Chacune de ces parties protège sur un des côtés de la machine. Pour le transport, ces parties peuvent être déplacées vers le milieu de la machine, autour de leurs articulations respectives, de manière à réduire la largeur de la machine. Cet agencement ne permet cependant pas de réduire la longueur de la machine. Or, dans le cas d'une machine frontale, c'est-à-dire qui se situe à l'avant du tracteur, cette importante longueur est très gênante lors des déplacements sur les routes et les chemins. Par ailleurs, lorsque la machine est portée au transport ce protecteur augmente considérablement le porte à faux de l'ensemble. En sus, en raison de cette longueur la machine nécessite un plus grand espace lors du remisage durant la période où elle n'est pas utilisée.

Sur d'autres machines connues différentes parties du dispositif de protection peuvent être déplacées vers le haut pour le transport. Dans cette position elles n'assurent cependant plus aucune protection. En sus, leur déplacement demande un effort physique non négligeable à l'opérateur.

La présente invention a pour but de remédier à ces inconvénients. Elle doit notamment proposer une machine sur laquelle l'utilisateur peut aisément réduire à la fois la largeur et la longueur du dispositif de protection lorsqu'il passe de la position de travail dans la position de transport, tout en conservant une bonne protection dans chacune des positions.

A cet effet, une importante caractéristique de l'invention consiste en ce que le dispositif de protection se compose de deux parties latérales dont chacune est réalisée en plusieurs segments qui sont articulés entre eux au moyen d'axes sensiblement verticaux et, d'une partie transversale qui est également réalisée en plusieurs segments articulés au moyen d'axes sensiblement verticaux.

Ces différents segments peuvent être déplacés les uns par rapport aux autres dans un plan sensiblement horizontal. Ils peuvent ainsi être amenés dans deux différentes positions. Dans la première position la surface délimitée par l'ensemble des segments est relativement importante. Ils entourent alors le rotor en position de travail. Dans la deuxième position la longueur et la largeur de la surface délimitée par les segments sont considérablement réduites par rapport à la première position. Ils entourent alors le rotor dans la position de transport.

Chaque partie latérale du dispositif de protection est réalisée en trois segments articulés entre eux. La partie transversale dudit dispositif est réalisée en deux segments. Cet agencement, respectivement en trois et deux segments de ces parties du dispositif de protection, permet d'obtenir une importante variation de la surface délimitée lors du passage de la position de travail dans la position de transport.

Selon une autre caractéristique un des segments de chaque partie latérale du dispositif de protection est articulé sur un des segments de la partie transversale. De ce fait, lesdites parties latérales se règlent automatiquement lorsque l'opérateur déplace les segments de la partie transversale. Ceci facilite la transposition et permet un gain de temps appréciable.

D'autres caractéristiques et avantages de l'invention ressortiront des revendications et de la description ci-après d'un exemple de réalisation non limitatif de l'invention, avec référence aux dessins annexés, dans lesquels :
- La figure 1 représente une machine selon l'invention en position de travail,
- La figure 2 représente une vue de côté de cette machine,
- La figure 3 représente la même machine en position de transport.

Telle qu'elle est représentée sur les figures annexées, la machine de fenaison selon l'invention comporte un châssis (1) portant un rotor (2). Ledit châssis se compose d'une poutre (3) portant à l'une de ses extrémités le rotor (2) et à son autre extrémité des moyens d'accouplement (4). Ceux-ci sont constitués par trois points d'accrochage (5, 6, 7) pour l'accouplement au dispositif d'attelage avant et/ou arrière d'un tracteur non représenté. Ce tracteur permet d'animer et de déplacer la machine dans des directions A et/ou B.

Le rotor (2) comporte un arbre support sensiblement vertical (8), une calotte (9) et un boîtier (10) qui porte des bras porte-outils (11). Ladite calotte est articulée sur la poutre (3) au moyen d'un axe (12) sensiblement horizontal et perpendiculaire à la direction dans laquelle s'étend la poutre (3). Elle comporte en son milieu un alésage dans lequel est logé l'axe support (8). Celui-ci porte à son extrémité inférieure un ensemble de trois roues (13, 14 et 15) qui se déplacent sur le sol durant le travail.

Le boîtier (10) est monté sur l'axe support (8) avec des roulements à billes ou à rouleaux, de sorte qu'il puisse tourner autour dudit axe. Il se situe directement sous la calotte (9). A sa périphérie sont prévus des paliers (16) à travers lesquels s'étendent les bras porte-outils (11). Chacun de ceux-ci est muni à son extrémité la plus éloignée du boîtier (10) de fourches de travail (17). L'autre extrémité de chaque bras (11) s'étend à l'intérieur du boîtier (10) et comporte un levier avec un galet. A l'intérieur du boîtier est prévue, d'une manière connue en soi, une came de commande avec un chemin de roulement qui reçoit lesdits galets. Cette came de commande est montée sur l'axe support (8) et en est rendue solidaire avec une clavette. Le chemin de roulement présente une section relativement plane et une section en élévation.

Sous la calotte (9) est logée une couronne dentée qui est solidaire de la partie supérieure du boîtier (10). Cette couronne est en prise avec un pignon d'entraînement lié à un arbre (18) qui traverse la calotte et s'étend en direction du tracteur. Cet arbre est relié à l'arbre de prise de force dudit tracteur au moyen d'arbres de transmission intermédiaires (19).

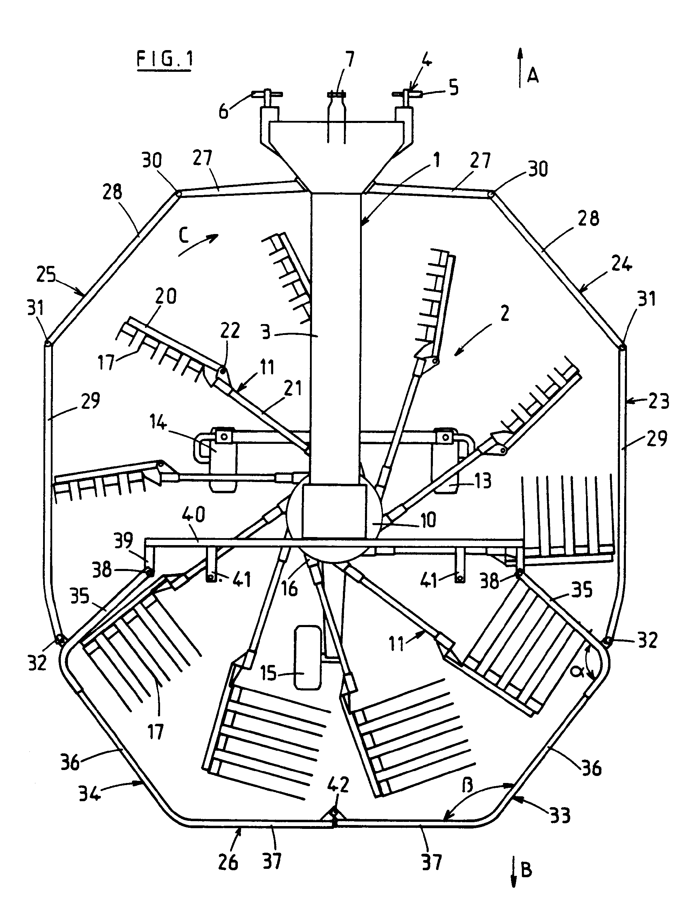

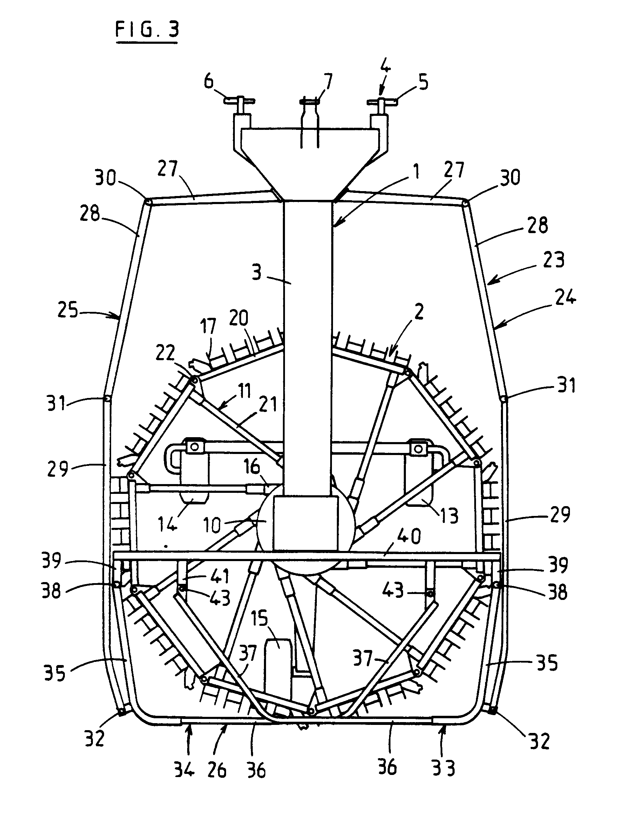

Les bras porte-outils (11) sont réalisés en deux parties (20 et 21) articulées entre elles au moyen d'axes (22). Les parties extérieures (20) peuvent être déplacées autour de ces axes (22) dans une position dans laquelle elles s'étendent pratiquement dans le prolongement des parties intérieures (21) (voir figure 1) et une seconde position dans laquelle elles sont repliées vers le boîtier central (10) (voir figure 3). Ces parties extérieures (20) pourraient également être déconnectables des parties intérieures (21).

La poutre (3) porte en sus un dispositif de protection (23). Celui-ci se compose de deux parties latérales (24 et 25) et d'une partie transversale (26) qui est située à l'opposé des moyens d'accouplement (4). Chacune de ces parties latérales (24 et 25) est réalisée en trois segments (27, 28 et 29) qui sont articulés entre eux au moyen d'axes (30 et 31) sensiblement verticaux. Un premier segment (27) est fixé avec une de ses extrémités sur la poutre (3) avec des vis. Il s'étend pratiquement perpendiculairement à la direction de déplacement A ou B. A son autre extrémité est articulé, au moyen de l'axe (30) un segment intermédiaire (28). Celui-ci s'étend obliquement par rapport à la direction de déplacement A ou B. Il est articulé avec son autre extrémité au troisième segment (29) au moyen de l'axe (31). Ce troisième segment (29) s'étend pratiquement dans la direction de déplacement A ou B. Son autre extrémité est articulée sur la partie transversale (26) du dispositif de protection avec un axe (32) qui est également sensiblement vertical.

Cette partie transversale (26) est réalisée en deux segments coudés (33 et 34). Chacun de ces deux segments comporte ainsi trois branches (35, 36 et 37) formant des angles obtus α et β entre elles. L'angle α a une valeur d'environ 100° tandis que l'angle β a une valeur d'environ 130°. La branche (35) de chaque segment (33 ou 34) est articulée au moyen d'un axe sensiblement vertical (38) sur une patte (39) d'une traverse (40) qui est solidaire de la poutre (3). Cette traverse (40) est sensiblement horizontale et est vissée sur l'extrémité de la poutre (3). Elle comporte en sus deux pattes de fixation (41) auxquelles peuvent être reliées les extrémités libres des branches (37) dans la position de transport.

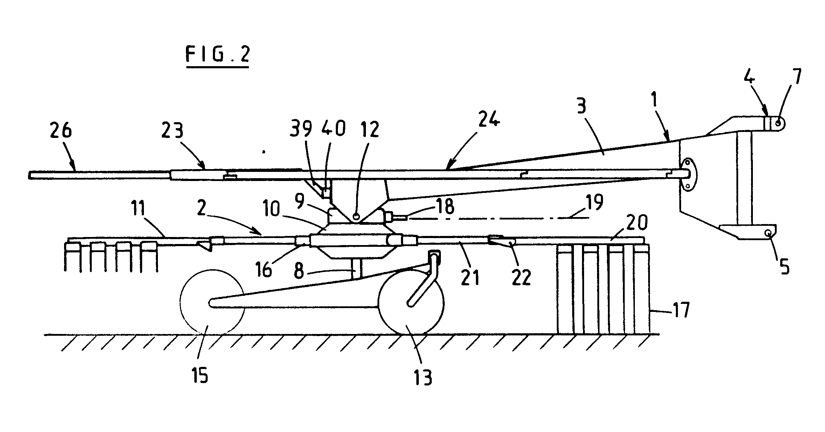

Pour le travail la machine est amenée dans la position représentée sur les figures 1 et 2. Le boîtier (10) avec les bras porte-outils (11) est alors entraîné en rotation autour de l'arbre support (8) dans le sens de la flèche (C). Cet entraînement est réalisé à partir de l'arbre de prise de force du tracteur, à travers le pignon et la couronne dentée prévus sous la calotte (9). Les galets des bras porte-outils (11) se déplacent alors dans le chemin de la came de commande logée dans le boîtier (10). Ils guident lesdits bras de telle sorte que dans la partie avant de leur trajectoire les fourches (17) soient dirigées vers le sol et râtellent les produits couchés sur le sol et que sur la partie latérale consécutive à ladite partie avant, les fourches (17) se lèvent et déposent les produits râtelés sous la forme d'un andain. Dans cette position, les différents segments (27, 28, 29, 33 et 34) du dispositif de protection (23) forment ensemble sensiblement un octogone dont la surface est relativement importante. Ils entourent complètement les bras (11) du rotor (2) et empêchent toute pénétration à l'intérieur de la trajectoire décrite par les fourches (17). Les extrémités libres des deux segments (33 et 34) qui constituent la partie transversale (26) sont reliées entre elles au moyen d'un boulon (42). Leurs branches (37) s'étendent alors dans le prolongement l'une de l'autre.

La machine peut être accouplée à l'avant ou à l'arrière du tracteur et être déplacée dans la direction A ou la direction B. Le dispositif de protection (23) est efficace dans chacune de ces directions. La came de commande des bras porte-outils (11) doit cependant être positionnée en fonction de la direction de déplacement A ou B afin que les fourches (17) râtellent toujours sur la partie la plus avancée de leur trajectoire.

Pour le transport, l'utilisateur réduit les dimensions du rotor (2) et du dispositif de protection (23) (voir figure 3). Cette même position pourra être choisie pour le stockage de la machine pendant les périodes de l'année où elle n'est pas utilisée. En ce qui concerne le rotor (2) la partie extérieure (20) de chaque bras porte-outils (11) est repliée d'un angle d'environ 120°, tel que représenté sur la figure 3. Ce repliement s'effectue autour des axes d'articulation (22). Il permet de réduire considérablement le diamètre du rotor (2).

Les segments (28, 29, 33 et 34) du dispositif de protection (23) sont également repliés autour de leurs axes d'articulation sensiblement verticaux (30, 31, 32 et 38). A cet effet la liaison entre les deux segments (33 et 34) est défaite et chacun de ces segments est pivoté autour de son axe d'articulation (38) jusqu'à ce que son extrémité libre entre en contact avec une des pattes (41) prévues sur la traverse (40). Ces deux segments (33 et 34) se croisent alors et chacun est fixé avec un boulon (43) sur une desdites pattes (41). En raison de la liaison entre chacun de ces segments (33 et 34) et une des parties latérales (24 et 25) ces dernières se déplacent automatiquement avec lesdits segments dans la position de transport. Les segments (27, 28 et 29) qui composent ces parties latérales (24 et 25) se déplacent les uns par rapport aux autres autour de leurs axes d'articulation (30 et 31). L'utilisateur n'a donc aucun réglage à effectuer sur ces parties latérales (24 et 25).

Dans cette position de transport le dispositif de protection (23) entoure complètement le rotor (2) avec les bras porte-outils (11) repliés. La longueur et la largeur hors tout de la machine sont alors considérablement réduites par rapport à la position de travail. Les axes de pivotement (38) des segments (33 et 34) de la partie transversale (26) se situent à l'intérieur de la surface délimitée par le dispositif de protection dans cette position de transport. Ainsi la machine ne présente aucune pièce saillante susceptible de causer des accidents.

Pour ramener le dispositif de protection (23) dans la position de travail il suffit de retirer les boulons de fixation (43) et de pivoter les deux segments (33 et 34) autour de leurs axes (38), jusqu'à ce que leurs extrémités se touchent à nouveau. Les deux parties latérales (24 et 25) dudit dispositif se déplacent automatiquement avec les deux segments (33 et 34) dans la nouvelle position.

Il est bien évident que l'invention n'est pas limitée au mode de réalisation décrit ci-dessus et représenté sur les desssins annexés. Des modifications restent possibles, notamment du point de vue de la constitution des divers éléments, ou par substitution d'équivalents techniques, sans sortir pour autant du domaine de protection conféré par les revendications.

## Revendications

1. Machine de fenaison comportant un châssis (1) portant au moins un rotor (2) qui est équipé de bras porte-outils (11) transposables dans une position de travail et une position de transport, ledit rotor (2) étant entouré d'un dispositif de protection (23) réalisé en plusieurs parties ajustables dans au moins deux positions dont l'une correspond à la position de travail et l'autre à la position de transport, caractérisée par le fait que le dispositif de protection (23) se compose de deux parties latérales (24 et 25) dont chacune est réalisée en plusieurs segments (27, 28 et 29) qui sont articulés entre eux au moyen d'axes sensiblement verticaux (30 et 31) et, d'une partie transversale (26) qui est également réalisée en plusieurs segments (33 et 34) articulés au moyen d'axes sensiblement verticaux (38).

2. Machine selon la revendication 1, caractérisée par le fait que chaque partie latérale (24 et 25) du dispositif de protection (23) est réalisée en trois segments (27, 28 et 29) articulés entre eux.

3. Machine selon la revendication 2, caractérisée par le fait que le premier segment (27) est fixé sur la poutre (3) et que le troisième segment (29) est articulé sur un des segments (33 et 34) de la partie transversale (26) du dispositif de protection (23).

4. Machine selon l'une quelconque des revendications précédentes, caractérisée par le fait que la partie transversale (26) du dispositif de protection (23) est réalisée en deux segments coudés (33 et 34).

5. Machine selon la revendication 4, caractérisée par le fait que chaque segment (33 et 34) est articulé sur une traverse (40) solidaire de la poutre (3), au moyen des axes (38) sensiblement verticaux.

6. Machine selon la revendication 5, caractérisée par le fait que chacun des axes d'articulations (38) se situe à l'intérieur de la surface délimitée par le dispositif de protection (23) dans la position de transport.

7. Machine selon l'une quelconque des revendications 4 à 6, caractérisée par le fait que dans la position de travail les deux segments (33 et 34) s'étendent dans le prolongement l'un de l'autre.

8. Machine selon l'une quelconque des revendications 4 à 7, caractérisée par le fait que dans la position de transport les deux segments (33 et 34) se croisent et sont reliés au moyen de leurs deux extrémités à la traverse (40).

## Patentansprüche

1. Heuwerbungsmaschine, die ein zumindest einen Rotor (2), der mit in eine Arbeitsstellung und in eine Transportstellung verlagerbaren Werkzeugtragarmen (11) versehen ist, tragendes Gestell (1) aufweist, welcher Rotor (2) von einer in mehreren Teilen, die in zumindest zwei Stellungen einstellbar sind, von denen eine der Arbeitsstellung und die andere der Transportstellung entspricht, ausgebildeten Schutzvorrichtung (23) umgeben ist, dadurch gekennzeichnet, daß sich die Schutzvorrichtung (23) aus zwei Seitenteilen (24, 25), die jeweils aus mehreren Segmenten (27, 28 und 29) bestehen, die miteinander mittels im wesentlichen vertikaler Achsen (30, 31) gelenkig verbunden sind, und einem quer verlaufenden Teil (26), der ebenfalls aus mehreren Segmenten (33, 34) besteht, die mittels im wesentlichen vertikaler Achsen (38) gelenkig verbunden sind, zusammensetzt.

2. Maschine nach Anspruch 1, dadurch gekennzeichnet, daß jeder Seitenteil (24 und 25) der Schutzvorrichtung (23) aus drei miteinander gelenkig verbundenen Segmenten (27, 28 und 29) gebildet ist.

3. Maschine nach Anspruch 2, dadurch gekennzeichnet, daß das erste Segment (27) auf dem Tragbalken (3) fixiert ist und daß das dritte Segment (29) an einem der Segmente (33 und 34) des quer verlaufenden Teils (26) der Schutzvortichtung (23) angelenkt ist.

4. Maschine nach einem der vorhergehenden Ansprüche, dadurch gekennzeichnet, daß der quer verlaufende Teil (26) der Schutzvorrichtung (23) aus zwei abgewinkelten Segmenten (33 und 34) gebildet ist.

5. Maschine nach Anspruch 4, dadurch gekennzeichnet, daß jedes Segment (33 und 34) an einem an dem Tragbalken (3) befestigten Querträger (40) mittels im wesentlichen vertikaler Achsen (38) angelenkt ist.

6. Maschine nach Anspruch 5, dadurch gekennzeichnet, daß sich jede der Gelenkachsen (38) im Inneren der von der Schutzvorrichtung (23) in der Transportstellung begrenzten Fläche befindet.

7. Maschine nach einem der Ansprüche 4 bis 6, dadurch gekennzeichnet, daß sich die beiden Segmente (33 und 34) in der Arbeitsstellung jweils in der gegenseitigen Verlängerung erstrecken.

8. Maschine nach einem der Ansprüche 4 bis 7, dadurch gekennzeichnet, daß die beiden Segmente (33 und 34) in der Transportstellung einander kreuzen und mittels ihrer beiden Enden mit dem Querträger (40) verbunden sind.

## Claims

1. Haymaking machine comprising a frame (1) supporting at least one rotor (2) equiped with tool carrying arms (11) transposable in a working position and in a transport position, said rotor (2) being surrounded by a protecting device (23) achieved in several parts adjustable in at least two positions, one corresponding to the working position and the other to the transport position, characterised in that the protecting device (23) is made up of two lateral parts (24 and 25) each achieved in several segments (27, 28 and 29) which are articulated with one another by means of approximately vertical axes (30 and 31) and of a cross part (26) also achieved in several segments (33 and 34) articulated by means of approximately vertical axes (38).

2. Machine according to claim 1, characterised in that each lateral part (24 and 25) of the protecting device (23) is achieved in three segments (27, 28 and 29) articulated with one another.

3. Machine according to claim 2, characterised in that the first segment (27) is fastened to the beam (3) and that the third segment (29) is articulated on one of the segments (33 and 34) of the cross part (26) of the protecting device (23).

4. Machine according to anyone of the preceding claims, characterised in that the cross part (26) of the protecting device (23) is achieved in two angled segments (33 and 34).

5. Machine according to claim 4, characterised in that each segment (33 and 34) is articulated by means of approximately vertical axes (38) on a cross-bar (40) rigidly fastened to the beam (3).

6. Machine according to claim 5, characterised in that each axis of articulation (38) is located inside of the surface delimited by the protecting device (23) in the transport position.

7. Machine according to anyone of claims 4 to 6, characterised in that in the working position the two segments (33 and 34) extend one in the continuation of the other.

8. Machine according to anyone of claims 4 to 7, characterised in that in the transport position the two segments (33 and 34) cross each other and are connected by means of their two ends to the cross-bar (40).
